# EUROPÄISCHE PATENTSCHRIFT

(11) **EP 0 340 642 B1**
(45) Veröffentlichungstag und Bekanntmachung des Hinweises auf die Patenterteilung: **24.02.1993**
(21) Anmeldenummer: 89107658.0
(22) Anmeldetag: 27.04.1989
(51) Int. Cl.: B29C 67/22, B29C 51/10

(54) **Verfahren zur Herstellung eines Polsterteils**
Method of making upholstery parts
Procédé pour fabriquer des éléments de rembourrage

(30) Priorität: 05.05.1988 DE 3815282
(43) Veröffentlichungstag der Anmeldung: 08.11.1989
(73) Patentinhaber: GRAMMER AG, D-92224 Amberg (DE)
(72) Erfinder: Übelacker, Horst, D-8451 Hohenburg (DE)
(74) Vertreter: LOUIS, PÖHLAU, LOHRENTZ & SEGETH

(56) Entgegenhaltungen:
- EP-A- 0 030 206
- GB-A- 1 026 016
- PATENT ABSTRACTS OF JAPAN, Band 5, Nr. 10 (M-51)[682], 22. Januar 1981; & JP-A-55 140 535 (TOYO GOMU) 04-11-1980
- PATENT ABSTRACTS OF JAPAN, Band 3, Nr. 72 (C-49), 21. Juni 1979; & JP-A-54 43 973 (MATSUSHITA) 04-06-1979

## Beschreibung

Die Erfindung betrifft ein Verfahren zur Herstellung eines Polsterteils, wobei ein eine Einlaßöffnung aufweisender Bezug, der ein Oberteil, ein Unterteil und ein das Oberteil mit dem Unterteil verbindendes Seitenteil aufweist, an eine Tiefziehform unter Ausbildung eines Hohlraumes eng angelegt wird, wonach in den durch den Bezug begrenzten Hohlraum ein Reaktionsgemisch eingebracht wird, das aufschäumt und das mit dem Bezug versehene hinterschäumte Polsterteil bildet.

Ein derartiges Verfahren ist aus der DE 35 27 540 C2 bekannt. Bei diesem Verfahren wird ein Bezug aus einem luftdichten Material verwendet, damit der Bezug an die beiden Formhälften der Tiefziehform eng anliegend angesaugt werden kann. Die Verwendung eines luftdichten Bezugsmaterials ist bei Polsterteilen insbesondere in Gestalt von Kopfstützen unerheblich. Handelt es sich jedoch bei einem solchen Polsterteil um ein Sitzpolster, so beeinträchtigt die Anwendung eines Bezuges aus luftdichtem Material das Sitzklima des Polsterelementes.

Aus der DE-Z, "Gummi, Asbest, Kunststoffe" 10/1972, S. 923 bis 926 sind hinterschäumte Polsterteile mit tiefgezogenen Bezügen beschrieben, wobei Bezüge zur Anwendung gelangen, die ebenfalls luftdicht sind, um sie an die Tiefziehform eng anliegend und faltenfrei ansaugen zu können. Zur luftdichten Ausbildung können diese Bezüge beispielsweise flammkaschiert sein. Derartige hinterschäumte Polsterteile weisen bezüglich ihres Sitzklimas die oben zur DE 35 27 540 C2 erwähnten Mängel auf.

Aus der GB 20 09 022 A ist ein Verfahren zur Herstellung einer einen Spiegel aufweisenden Sonnenblende für ein Fahrzeug bekannt. Bei diesem Verfahren kommt eine zweiteilige Tiefziehform zur Anwendung, wobei bei geöffneter Tiefziehform zuerst an die untere Formmatrize ein erstes Bezugsteil und der Rückspiegel eingebracht wird. Anschließend wird auf der Rückseite des Rückspiegels ein Reaktionsgemisch aufgebracht, das während des Reaktionsablaufes aufschäumt. Unmittelbar nach dem Aufbringen des Reaktionsgemisches auf der Rückseite des Spiegels wird das erste Bezugsteil durch ein zweites Bezugsteil abgedeckt und auf der unteren Matrize das obere zweite Matrizenteil der Tiefziehform abdichtend angeordnet. Während der Anordnung des zweiten Bezugsteiles und der oberen Matrize reagiert das Reaktionsgemisch, so daß es erforderlich ist, entweder ein langsam reagierendes Reaktionsgemisch zu verwenden, oder das zweite Bezugsteil und die obere Matrize der Tiefziehform möglichst rasch auf der unteren Matrize anzordnen. Wird ein vergleichsweise langsam reagierendes Reaktionsgemisch verwendet, so ergeben sich lange Taktzeiten zur Herstellung derartiger Sonnenblenden. Unabhängig von dem verwendeten Reaktionsgemisch ist die Herstellung einer solchen Sonnenblende durch die getrennte Anordnung des zweiten Bezugsteils auf dem ersten Bezugsteil und durch die nachfolgende dichte Anordnung der oberen Matrize auf der unteren Matrize der Tiefziehform relativ aufwendig. Zur Herstellung eines ein vergleichsweise grosses Volumen aufweisenden Polsterteils, insbesondere eines Sitzpolsters für Büro- oder Fahrzeugsitze ist das aus der GB 20 09 022 A bekannte Verfahren wohl kaum geeignet. Das gilt selbstverständlich auch für die Herstellung von Polsterteilen in Form von Rückenlehnen für derartige Sitze.

Ein Verfahren zur Herstellung eines Sitzpolsters ist aus der DE 30 41 164 C2 bekannt. Dort kommt ein luftdurchlässiger Bezug zur Anwendung, um das Sitzklima des Sitzpolsters zu verbessern. Um den luftdurchlässigen Bezug jedoch an eine Formmatrize eng und faltenfrei anlegen zu können, ist es erforderlich, den Bezug mit Hilfe einer Obermatrize gegen die die Sitzoberfläche negativ darstellende Untermatrize zu pressen. Anschließend wird der Bezug beispielsweise mit Hilfe eines an der Untermatrize anliegenden Unterdruckes an der Untermatrize festgehalten, wonach die Obermatrize von der Untermatrize entfernt werden kann. Nachfolgend wird auf den an der Untermatrize festgehaltenen Bezug ein selbständiges Polsterteil in Gestalt eines gegossenen Blockes oder in Form einer profilgeschnittenen Platte aus dem Polstermaterial angeordnet und beispielsweise mittels einer Klebstoffschicht mit dem Bezug verbunden. Daran anschließend werden die am Bezug vorgesehenen Seitenteile mit ihrer Außenseite nach innen geklappt und an das Polsterteil angelegt. Zur Durchführung dieses Verfahrens sind demnach zwei Matrizen erforderlich, die sich bezüglich ihrer Oberflächenstruktur entsprechen müssen. Dadurch, daß die Seitenteile nach dem Auflegen des Polstermaterials auf das Oberteil des Bezuges zum Polsterteil umgeklappt werden müssen, ergibt sich eine relativ aufwendige Herstellung des Sitzpolsters mit im Vergleich zur an sich bekannten Hinterschäumtechnik tiefgezogener Bezüge langen Taktzeiten.

Deshalb liegt der Erfindung die Aufgabe zugrunde, ein Verfahren der eingangs genannten Art zur Herstellung eines Polsterteils zu schaffen, mit dem in kurzen Taktzeiten Polsterteile hergestellt werden können, die ein gutes Sitzklima aufweisen.

Diese Aufgabe wird erfindungsgemäß dadurch gelöst, daß in die Tiefziehform ein Bezug eingelegt wird, dessen Unter- und Seitenteil gasdicht und dessen Oberteil luftdurchlässig ist, daß die Tiefziehform derart geneigt wird, daß der an der Tiefziehform anliegende Bezug mit seinem Unterteil unter einem beliebigen, von der Lotrechten abweichenden Neigungswinkel positioniert wird, wobei das Unterteil des Bezuges den Hohlraum unterseitig abschließt, und daß anschließend das Reaktionsgemisch auf das gasdichte Unterteil des Bezuges aufgebracht wird. Im Extremfall ist es selbstverständlich auch möglich, die Tiefziehform genau lotrecht bzw. sogar leicht überhängend anzuordnen, und das Reaktionsgemisch auf dem gasdichten Unterteil des Bezuges aufzubringen. Infolge der Gravitation und infolge der Adhäsion des Reaktionsgemisches am Unterteil des Bezuges fließt das Reaktionsgemisch am Unterteil des Bezuges entlang. Gleichzeitig läuft die Reaktion des Reaktionsgemisches ab, so daß das Reaktionsgemisch im durch den Bezug quasi allseitig begrenzten Hohlraum aufschäumt. Die Luftundurchlässigkeit d.h. die Gasdichtheit des Unterteils und des Seitenteils des Bezuges kann durch eine an sich bekannte Kaschierung dieser Teile des Bezuges erfolgen. Selbstverständlich wäre es jedoch auch möglich, das Unterteil des Bezuges aus einem formstabilen gasundurchlässigen Material auszubilden. Dabei kann es sich beispielsweise um ein Metall- oder Kunststoffblechteil handeln, welches das Unterteil des Bezuges des Polsterteils bildet. Als vorteilhaft hat es sich erwiesen, daß die Tiefziehform unter einem beliebigen spitzen Winkel derart während des Einbringens des Reaktionsgemisches geneigt ist, daß das gasdichte Unterteil den durch den quasi sackförmigen Bezug gebildeten Hohlraum auf seiner Unterseite begrenzt, so daß das auf das gasdichte Unterteil des Bezuges aufgebrachte Reaktionsgemisch infolge der Gravitation am Unterteil bis zum Seitenteil nach unten fließt. Da das Unterteil und das Seitenteil aus einem gasdichten Material sind, kann das Reaktionsgemisch durch das Unter- und das Seitenteil nicht durchdringen. Nachdem das Reaktionsgemisch das luftdurchlässige Oberteil des Bezuges erst zu einem späteren Zeitpunkt durch das Aufschäumen des Reaktionsgemisches erreicht, weist das Reaktionsgemisch bei Erreichen des luftdurchlässigen Oberteils des Bezuges bereits einen fortgeschrittenen Reaktionszustand auf, bei welchem die Gefahr eines Durchdringens des luftdurchlässigen Oberteils des Bezuges nur mehr äußerst bedingt oder nicht mehr gegeben ist. Dadurch erhält man ein Polsterteil mit einem an seiner Oberseite luftdurchlässigen Bezug, und damit ein Polsterteil mit einem guten Sitzklima. Durch geeignete Wahl des Reaktionsgemisches ergibt sich außerdem ein weicher Andruck des Polsterteils und somit ein guter Sitzkomfort desselben.

Es hat sich als vorteilhaft erwiesen, daß die Tiefziehform nach dem Einbringen des Reaktionsgemisches zur Steuerung des Verlaufes des Reaktionsgemisches bzw. des Reaktionsverlaufes geschwenkt wird, so daß sich ihr Neigungswinkel ändert. Dabei kann der Neigungswinkel der Tiefziehform mit fortschreitendem Reaktionsablauf verkleinert werden. Durch die Ausbildung des Oberteils des Bezuges aus einem luftdurchlässigen Material ergibt sich der weitere Vorteil, daß der durch den Bezug begrenzte Hohlraum durch das luftdurchlässige Oberteil des Bezuges hindurch entlüftet werden kann, wodurch eine Lunkerbildung im aufschäumenden Reaktionsgemisch bzw. im hinterschäumten Polsterteil vermieden wird.

Um den Bezug insbesondere mit seinem Unterteil und seinem Seitenteil an die dem herzustellenden Polsterteil entsprechende Kontur des Hohlraumes der Tiefziehform eng und faltenfrei anzulegen, ist die Tiefziehform in an sich bekannter Weise mit Saugkanälen ausgebildet. Diese Saugkanäle münden in die Abschnitte des Hohlraumes der Tiefziehform ein, die durch das gasdichte Unterteil und durch das gasdichte Seitenteil des Bezuges bedeckt sind, wenn der Bezug in der Tiefziehform angeordnet ist. Die Seite der Tiefziehform, die zu dem gasdurchlässigen Oberteil des Bezuges benachbart ist, weist keine Durchgangskanäle auf, um während des Reaktionsablaufes, d.h. während des Aufschäumens des Reaktionsgemisches einen Gegendruck auszubilden, durch den ein Eindringen des Reaktionsgemisches in das luftdurchlässige Bezugsteil verhindert wird.

Weitere Einzelheiten, Merkmale und Vorteile ergeben sich aus der nachfolgenden Beschreibung eines in der Zeichnung schematisch dargestellten Polsterteiles, das mit Hilfe des erfindungsgemässen Verfahrens hergestellt wurde, sowie eine schematische Darstellung einer Tiefziehform zur Durchführung dieses Verfahrens. Es zeigt:
- Fig. 1: eine schematische Darstellung der Vorrichtung zur Durchführung des Verfahrens zur Herstellung eines Polsterteils, und
- Fig. 2: eine räumliche Darstellung eines in einer Vorrichtung gemäß Fig. 1 hergestellten Polsterteils.

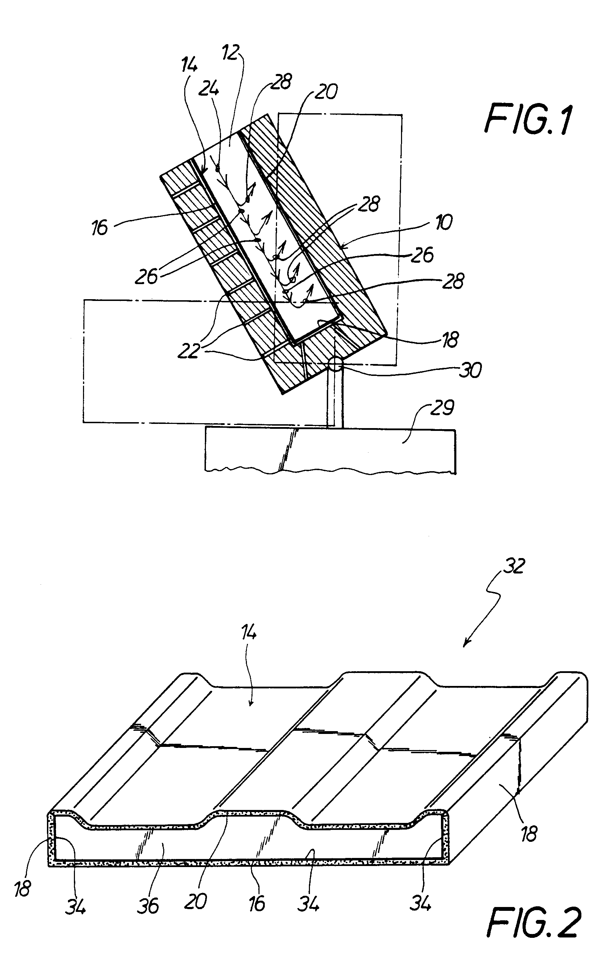

Fig. 1 zeigt eine Tiefziehform 10 in einem Längsschnitt. Die Tiefziehform 10 weist einen Hohlraum 12 auf, dessen Form der Gestalt des herzustellenden Polsterteils entspricht. Im Hohlraum 12 der Tiefziehform 10 wird ein Bezug 14 angeordnet, der ein gasdichtes Unterteil 16, ein gasdichtes Seitenteil 18 und ein luftdurchlässiges Oberteil 20 aufweist. Die Tiefziehform 10 weist Saugkanäle 22 auf, die in den Hohlraum 12 der Tiefziehform mit ihrem einen Ende einmünden. Die gegenüberliegenden zweiten Enden der Saugkanäle 22 sind mit einer (nicht dargestellten) Vakuumquelle verbindbar. Der Bezug 14 wird mit seinem gasdichten Unterteil 16 und mit seinem gasdichten Seitenteil 15 eng anliegend und faltenfrei an die entsprechenden Flächenabschnitte des Hohlraumes 12 der Tiefziehform 10 angesaugt.

Bevor in den durch den Bezug 14 begrenzten Hohlraum 12 der Tiefziehform 10 ein Reaktionsgemisch eingebracht wird, wird die Tiefziehform 10, bei der es sich vorzugsweise um eine zwei- oder mehrteilige Form handelt, gegen die Lotrechte um einen beliebigen Winkel derart geschwenkt, daß das Unterteil 16 -wie in Fig. 1 dargestellt- den Hohlraum 12 unterseitig abschließt. Das Einbringen des Reaktionsgemisches ist durch den Pfeil 24 angedeutet. Das Reaktionsgemisch fließt dann entlang der Innenseite des geneigten Unterteiles 16 des Bezuges 14 in Richtung zum vorderen Seitenteil 18 des Bezuges 14. Das ist durch die Pfeile 26 schematisch angedeutet. Gleichzeitig läuft die Reaktion des Reaktionsgemisches ab, wobei das Reaktionsgemisch im Hohlraum 12 der Tiefziehform 10 aufschäumt. Das Aufschäumen des Reaktionsgemisches ist durch die Pfeile 28 angedeutet. Während des Reaktionsablaufes, d.h. während des Aufschäumens des Reaktionsgemisches kann die Tiefziehform 10 um eine zwischen der Tiefziehform 10 und einem Basiselement 28 vorgesehene Schwenkachse 30 verschwenkt werden. In Fig. 1 ist außer der geneigten Stellung der Tiefziehform 10 auch eine horizontal liegende Position sowie eine lotrecht stehende Position der Tiefziehform 10 jeweils durch dünne strichpunktierte Linien angedeutet.

Fig. 2 zeigt ein Polsterteil 32 mit einem gasdichten Unterteil 16 und einem luftdurchlässigen Oberteil 20, wobei das Unterteil 16 und das Oberteil 20 durch ein um das Polsterteil 32 umlaufendes Seitenteil 18 aus einem gasdichten Material miteinander verbunden sind. Bei dem Unterteil 16 und dem Seitenteil 18 kann es sich um ein textiles Material handeln, das auf der dem Inneren des Polsterteils 32 zugewandten Innenseite mit einer gasdichten Kaschierung 34 bedeckt ist. Im Gegensatz dazu kann das Oberteil 20 des Bezuges 14 aus einem luftdurchlässigen textilen Material sein. Mit der Bezugsziffer 36 ist ein Kunststoffschaum bezeichnet, der den Kern des Polsterteils 32 bildet.

Wie bereits ausgeführt wurde, kann das Seitenteil 18 des Bezuges 14 um das Polsterteil 32 umlaufen. Um das Reaktionsgemisch für den Kunststoffschaum 36 in den durch den Bezug 14 begrenzten Hohlraum 12 (s. Fig. 1) einbringen zu können, ist es nur erforderlich, daß der Bezug 14 an einer Stelle eine Einlaßöffnung aufweist. Diese Einlaßöffnung wird vorzugsweise am Seitenteil 18 oder am Unterteil 16 des Bezuges 14 vorgesehen.

## Patentansprüche

1. Verfahren zur Herstellung eines Polsterteils (32), wobei ein eine Einlaßöffnung aufweisender Bezug (14), der ein Oberteil (20), ein Unterteil (16) und ein das Oberteil (20) mit dem Unterteil (16) verbindendes Seitenteil (18) aufweist, an eine Tiefziehform (10) unter Ausbildung eines Hohlraumes (12) eng angelegt wird, wonach in den durch den Bezug (14) begrenzten Hohlraum (12) ein Reaktionsgemisch (24) eingebracht wird, das aufschäumt (28) und das mit dem Bezug (14) versehene hinterschäumte Polsterteil (32) bildet,
**dadurch gekennzeichnet,**
daß in die Tiefziehform (10) ein Bezug (14) eingelegt wird, dessen Unter- und Seitenteil (16, 18) gasdicht und dessen Oberteil (20) luftdurchlässig ist, daß die Tiefziehform (10) derart geneigt wird, daß der an der Tiefziehform (10) anliegende Bezug (14) mit seinem Unterteil (16) unter einem beliebigen, von der Lotrechten abweichenden Neigungswinkel positioniert wird, wobei das Unterteil (16) des Bezuges (14) den Hohlraum (12) unterseitig abschließt, und daß anschließend das Reaktionsgemisch (24) auf das gasdichte Unterteil (16) des Bezuges (14) aufgebracht wird.

2. Verfahren nach Anspruch 1,
**dadurch gekennzeichnet,**
daß die Tiefziehform (10) nach dem Einbringen des Reaktionsgemisches (24) zur Steuerung des Verlaufes des Reaktionsgemisches bzw. des Reaktionsverlaufes geschwenkt wird, so daß sich ihr Neigungswinkel ändert.

3. Verfahren nach Anspruch 2,
**dadurch gekennzeichnet,**
daß der Neigungswinkel der Tiefziehform (10) mit fortschreitendem Reaktionsablauf verkleinert wird.

## Claims

1. A process for the production of an upholstery member (32), wherein a cover (14) which has an inlet opening and which comprises a top portion (20), a bottom portion (16) and a side portion (18) joining the top portion (20) to the bottom portion (16) is closely applied against a deep drawing mould (10), forming a cavity (12), whereupon a reaction mixture (24) is introduced into the cavity (12) defined by the cover (14), the reaction mixture foaming up (28) and forming the foam-backed upholstery member (32) which is provided with the cover (14), characterised in that a cover (14) whose bottom and side portions (16, 18) are gas-tight and whose top portion (20) is permeable to air is inserted into the deep drawing mould (10), that the deep drawing mould (10) is inclined in such a way that the cover (14) which lies against the deep drawing mould (10) is positioned with its bottom portion (16) at any inclined angle which differs from the perpendicular, wherein the bottom portion (16) of the cover (14) closes off the cavity (12) at the underside, and that then the reaction mixture (24) is applied to the gas-tight bottom portion (16) of the cover (14).

2. A process according to claim 1 characterised in that the deep drawing mould (10) is pivoted so that its angle of inclination changes after the reaction mixture (24) has been introduced in order to control the course of the reaction mixture or the reaction procedure.

3. A process according to claim 2 characterised in that the angle of inclination of the deep drawing mould (10) is reduced as the reaction progresses.

## Revendications

1. Procédé pour la fabrication d'un coussin (32), dans lequel un revêtement (34) présentant une ouverture de remplissage et comportant une portion supérieure (20), une portion inférieure (16) et une portion latérale (18) réunissant la portion supérieure (20) à la portion inférieure (16), est placé étroitement serré contre un moule (10) en créant un espace creux (12), à la suite de quoi est introduit dans l'espace creux (12) délimité par le revêtement (14) un mélange réactionnel (24), qui s'expanse par moussage (28) et qui forme avec le revêtement (14) un coussin présentant à l'arrière une mousse,
caractérisé en ce que dans un moule (10) est placé un revêtement (14) dont les portions inférieure et latérale (16, 18) sont imperméables aux gaz et dont la portion supérieure est perméable à l'air, en ce que le moule est incliné de telle manière que le revêtement (14) situé dans le moule (10) est positionné avec sa portion inférieure (16) faisant un angle d'inclinaison par rapport à la verticale, de sorte que la portion inférieure (16) du revêtement (14) obture le fond de l'espace creux (12) et en ce que le mélange réactionnel (24) est introduit sur la portion inférieure imperméable aux gaz (16) du revêtement (14).

2. Procédé selon la revendication 1, caractérisé en ce que le moule (10), après introduction du mélange réactionnel (24) est basculé de manière à modifier son angle d'inclinaison, en vue de commander le déroulement de la réaction du mélange réactionnel.

3. Procédé selon la revendication 2, caractérisé en ce que l'angle d'inclinaison du moule (10) est diminué progressivement au cours du déroulement de la réaction.
